# EUROPÄISCHE PATENTANMELDUNG

(11) **EP 1 049 337 A2**
(43) Veröffentlichungstag der Anmeldung: **02.11.2000**
(21) Anmeldenummer: 00108880.6
(22) Anmeldetag: 26.04.2000
(51) Int. Cl.: H04Q 3/00

(54) **Intelligente Netzwerkdienste**

(30) Priorität: 26.04.1999 DE 19924811; 16.07.1999 DE 19933547
(71) Anmelder: SIEMENS AKTIENGESELLSCHAFT, 80333 München (DE)
(72) Erfinder: Aschir, Alexander, 13581 Berlin (DE); Berg, Andreas, Dr., 10585 Berlin (DE)

(57) **Zusammenfassung**

Falls bei der Intialisierung eines MTC-Dienstes für einen Teilnehmer (TNB) eines als Overlay-Netz realisierten Telekommunikationsnetz der zur Durchführung des Dienstes erforderliche Leistungsumfang die auf seiten des Zugangs-SSP-Knotens (SS1) unterstützte Leistungsmenge übersteigt, wird von dem Dienstesteuerknoten (SCP) aus der Rufadresse eine Routingadresse, welche eine Information zum Weiterrouten der Verbindung zu einem zweiten, die erforderliche Leistungsmenge unterstützenden SSP-Knoten (SS2) enthält, erstellt und dem ersten SSP-Knoten (SS1) zum Weiterrouten übermittelt (5).

## Beschreibung

Die Erfindung betrifft ein Telekommunikationsnetz mit
- einer Dienstesteuereinrichtung zum Steuern und Durchführen von Intelligenten Diensten und
- Dienstevermittlungseinrichtungen, welche zur Vermittlung von Leistungskomponenten Intelligenter Dienste jeweils eine vorgegebene Leistungsmenge gemäß einem vorgegebenen Anwendungsprotokoll unterstützen.

Ebenso betrifft die Erfindung ein Verfahren zum Routen einer ankommenden Kommunikationsverbindung in einem Telekommunikationsnetz der genannten Art, bei welchem von einer ersten Dienstevermittlungseinrichtung des Netzes in Folge einer bei ihr ankommenden Verbindungsanforderung für eine Kommunikationsverbindung zu einem Teilnehmer des Netzes, welcher zumindest einen für ankommende Rufe zu aktivierenden Intelligenten Dienst subskribiert hat, eine Dienstinitialisierungsnachricht an die Dienstesteuereinrichtung gesendet wird.

Im Zusammenhang mit modernen Telekommunikationsnetzen ist es bekannt, dass neben den Grunddiensten, wie z.B. dem Telefon- und Facsimiledienst eines Telefonnetzes, weitere verbindungsorientierte Dienste eingerichtet sind, die von einem Teilnehmer des Netzes angesprochen werden können und die im folgenden als Intelligente Dienst bezeichnet werden; das Netz, das diese Dienste unterstützt, wird als Intelligentes Netz (IN) bezeichnet. Die übliche Architektur des Intelligenten Netzes sieht neben Netzeinrichtungen mit einer Dienstevermittlungsfunktion, den sogenannten Dienstevermittlungseinrichtungen oder SSP-Knoten ('Service Switching Point'), Dienstesteuerknoten ('Service Control Point', SCP) als Einrichtungen zur Steuerung und Durchführung von intelligenten Zusatzdiensten des Intelligenten Netzes vor; die Dienstevermittlungsknoten und Dienstesteuerknoten sind über Signalisierungsstrecken miteinander verbunden.

Für Mobilfunknetze nach dem GSM-Standard ('Global System for Mobile Communication') wurde eine sogenannte CAMEL-Plattform ('Customised Applications tor Mobile network Enhanced Logic') definiert, um eine weltweite Nutzung der Leistungsmerkmale des Intelligenten Netzes zu ermöglichen. In einem Mobilfunknetz werden die Dienstevermittlungsknoten gewöhnlicherweise als M-SSP ('Mobile SSP') bezeichnet. Als Anwenderteil ('application part') wird hierbei ein spezielles Protokoll verwendet, das für das Mobilfunknetz aus dem CAP-Protokoll ('CAMEL Application Part', vgl. GSM 09.78) besteht. Für nähere Informationen zu CAMEL und dem CAP-Protokoll sei auf die folgenden GSM-Standards verwiesen: GSM 02.78 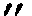 Digital cellular telecommunications system (Phase 2+); Customised Applications for Mobile Network Enhanced Logic (CAMEL) Service Definition (Stage 1).", GSM 03.78 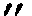 Digital cellular telecommunications system (Phase 2+); Customised Applications for Mobile Network Enhanced Logic (CAMEL Phase) (Stage 2)." und GSM 09.78 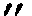 Digital cellular telecommunications system (Phase 2+); Customised Applications for Mobile Network Enhanced Logic (CAMEL) CAMEL Application Part (CAP) specification.".

Mit dem CAP wurde erstmals ein Protokoll zwischen M-SSP und SCP geschaffen, mit dem einerseits roamenden - d.h. über den Versorgungsbereich ihres Heimatnetzes (HPLMN, 'Home Public Line Mobile Network') hinaus sich auch in anderen Besuchernetzen (VPLMN, 'Visited Public Line Mobile Network') bewegenden - IN-Teilnehmern Intelligente Dienste auch außerhalb ihres Heimatnetzes angeboten, andererseits auch Teilnehmern im Heimatnetz selbst zur Verfügung gestellt werden können. Das CAP-Protokoll sieht gemäß GSM 09.78 einen festgelegten Satz von Funktionalitäten vor, den sogenannten Capability Set 1 (CS1). Bei der Einführung des CAP-Protokolls wurde in der CAP-Phase 1 - gemäß den diesbezüglichen GSM-Standards GSM 02.78 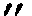 Digital cellular telecommunications system (Phase 1); Customised Applications for Mobile Network Enhanced Logic (CAMEL) Service Definition (Stage 1).", GSM 03.78 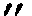 Digital cellular telecommunications system (Phase 1); Customised Applications for Mobile Network Enhanced Logic (CAMEL Phase) (Stage 2)." und GSM 09.78 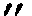 Digital cellular telecommunications system (Phase 1); Customised Applications for Mobile Network Enhanced Logic (CAMEL) CAMEL Applicatlon Part (CAP) specification." - lediglich eine Teilmenge des CS1 realisiert, sodass die CAP-Phase 1 nur einen sehr eingeschränkten Befehlssatz des vorgesehenen CS1 enthält. Mit den sieben in der CAP-Phase 1 realisierten Operationen (statt der 29 in CS1) lassen sich komplexe Intelligente Dienste nicht ausführen - sie benötigen einen umfangreicheren Satz an Befehlen, wie sie insbesondere von dem CS1 zur Verfügung gestellt würden. Zur Durchführung eines solchen Intelligenten Dienstes wird nach bekannter Art auf der Grundlage der Zwischenamtssignalisierung des ISUP die Verbindung zu einem M-SSP geroutet, der den Dialog mit dem SCP über ein INAP-Protokoll ('Intelligent Network Application Part') führen kann, da in dem INAP-Protokoll der Operationsumfang des CS1 realisiert ist. Dagegen werden Intelligente Dienste, die innerhalb des Umfangs der CAP-Phase 1 ausführbar sind, nicht weitergeroutet, sondern in dem betreffenden M-SSP durchgeführt.

Für Intelligente Dienste, die bei abgehenden Verbindungen aus Besuchernetzen - als sogenanntes MOC-Szenario (MOC = 'Mobile Originating Calls') - gestartet werden, ist in der nachveröffentlichten DE 198 14 162 A1 der Anmelderin ein Verfahren zur Informationsübertragung beschrieben, durch welches zwischen SCP und M-SSP Daten und Parameter übertragen werden können, ohne dass hierfür der Bestand der Nachrichten zwischen der dem Anschluss des rufenden Teilnehmers zugeordnete Vermittlungseinrichtung, den Heimatregistern und des M-SSP gegenüber den bestehenden CAP- und INAP-Protokollen geändert werden müsste. Demgemäß werden während eines ersten Dialogs über CAP der M-SSP in dem Besuchernetz des rufenden Teilnehmers mit einem SCP im Heimatnetz des rufenden Teilnehmers alle Parameter der Beginnoperation, die gemäß GSM-Standard mittels einer IDP-Nachricht ('Initial Detection Part') erfolgt, zwischengespeichert und dann die Verbindung zu einem INAP-fähigen M-SSP im Heimatnetz weitergeroutet. Dort wird ein zweiter Dialog über das INAP-Protokoll mit demselben SCP angestoßen, in dem die ursprünglichen Parameter der Beginnoperation (IDP-Nachricht) mittels einer ebenfalls übertragenen Korrelationsinformation ('correlation id') wiedergefunden werden, sodass dann der ursprünglich gewünschte Intelligente Dienst seitens des INAP-fähigen M-SSP gestartet werden kann.

Die genannte MOC-Lösung kann jedoch nicht ohne weiteres auf den Fall, worin der Intelligente Dienst von seiten des gerufenen Teilnehmers ausgelöst wird, - das sogenannte MTC-Szenario (MTC = 'Mobile Terminating Calls', 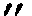 ankommende Verbindungen 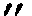 ) - übertragen werden. Denn dies würde drei Dialoge mit dem SCP erforderlich machen: einen ersten Connect-Dialog gemäß dem CAP-Protokoll zu einem INAP-fähigen M-SSP, einen zweiten Connect-Dialog über das INAP-Protokoll zum Zweck der Heimatregister-Interrogation zwischen dem INAP-fähigen M-SSP und dem Heimatregister, sowie einen dritten Dialog über das INAP-Protokoll für die Durchführung von Operationen, welche durch die Dienste-Logik verlangt werden, wie z.B. Vergebührungsanwendungen (sogenanntes 'Apply Charging') und Routing-Operationen. Dies würde somit beträchtlichen Signalisierungsverkehr mit sich bringen. Daher erscheint eine derartige Lösung für Hersteller wie Netzbetreiber kaum akzeptabel.

In diesem Zusammenhang ist anzumerken, dass ein Weiterrouten ankommender Verbindungen für einen MTC-Dienst, wenn das betreffende Mobilfunknetz ein voll integriertes Netz ist, in dem alle Vermittlungseinrichtungen ein INAP-Protokoll unterstützen, nicht erforderlich ist. Für diesen Zweck kann durch geeignete Administrierung der M-SSP-Knoten des Netzes erreicht werden, dass - obwohl die Besucherregister und Heimatregister des Netzes gemäß GSM-Standard das MAP-Protokoll ('Mobile Application Part'), insbesondere MAP Version 3, unterstützen und somit die Unterstützung der CAP-Phase 1 bieten - für einen MTC-Dienst das INAP-Protokoll genutzt wird. Jedoch sind Netze, in denen nicht alle Netzknoten INAP-fähig sind, sogenannte Overlay-Netze, häufig. In Overlaynetzen ist somit nicht gewährleistet, dass der betreffende M-SSP, sofern für einen MTC-Dienst der Operationsumfang der CAP-Phase 1 nicht ausreicht, ein INAP-Protokoll nutzen kann. Das erwähnte MAP-Protokoll ist im GSM-Standard GSM 09.02 (ETS 300 974) 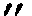 Digital cellular telecommunications system (Phase 2+); Mobile Application Part specification" näher beschrieben.

Es ist Aufgabe der vorliegenden Erfindung, das Routen ankommender Verbindungen zur Durchführung von Intelligenten Diensten zu verbessern.

Diese Aufgabe wird ausgehend von einem Telekommunikationsnetz der eingangs genannten Art dadurch gelöst, dass erfindungsgemäß die Dienstesteuereinrichtung dazu eingerichtet ist, aufgrund einer von einer ersten Dienstevermittlungseinrichtung her empfangenen Dienstlnitialisierungsnachricht betreffend eine ankommende Kommunikationsverbindung zu einem Teilnehmer des Netzes
- zu überprüfen, ob in Bezug auf den Teilnehmer ein für ankommende Rufe zu aktivierender Intelligenter Dienst subskribiert ist, der die auf seiten der ersten Dienstevermittlungseinrichtung angebotene Leistungsmenge übersteigt, sowie im Falle, dass dies zutrifft,
- aus der Rufadresse des gerufenen Teilnehmers eine Routingadresse, welche eine Information zum Weiterrouten der Verbindung zu einer zweiten, eine für den Dienst erforderliche Leistungsmenge unterstützenden Dienstevermittlungseinrichtung enthält, zu erstellen und der ersten Dienstevermittlungseinrichtung zu übermitteln.

Die erfindungsgemäß erstellte und an den ersten Dienstevermittlungsknoten gesendete Routingadresse bewirkt sodann gemäß wohlbekannter Verfahren ein Routen der Verbindung zu dem zweiten Dienstevermittlungsknoten, welcher die ursprüngliche Teilnehmeradresse zurückgewinnt und den Verbindungsaufbau einschließlich des MTC-Dienstes fortsetzt.

Durch diese Lösung ist die Ausführung von MTC-Diensten auch in Overlaynetzen gewährleistet, ohne dass ein Aufrüsten der Dienstevermittlungsknoten notwendig würde. Vorteilhaft ist insbesondere, dass nach der Erfindung das Routen mit geringfügigem zusätzlichem Signalisierungsaufwand auskommt.

In einer bevorzugten Ausführungsform des erfindungsgemäßen Netzes ist die Dienstesteuereinrichtung dazu eingerichtet, die Überprüfung der von den Dienstevermittlungseinrichtungen unterstützten Leistungsmengen sowie die Auswahl der zweiten Dienstevermittlungseinrichtung anhand einer von seiten der ersten Dienstevermittlungseinrichtung übermittelten Subskriptionsinformarion betreffend des/der dem Teilnehmer zugeordneten Dienste(s) und die zugehörende(n) Leistungsmenge(n) auszuführen. Dies vermeidet zusätzliche Signalisierungen zwischen dem Dienstesteuerknoten und einer Teilnehmerdatenbasis für eine Abfrage der teilnehmerspezifischen Dienstdaten.

In einer besonders zweckmäßigen Ausführungsform ist das Netz als Mobilfunknetz realisiert und die Dienstevermittlungseinrichtungen unterstützen jeweils das MAP-Protokoll oder das INAP-Protokoll. Hierbei stellt wie bereits erläutert das MAP-Protokoll eine kleinere Leistungsmenge dar, demgegenüber das INAP-Protokoll einen Gesamtumfang an Leistungsmerkmalen zur Verfügung stellt.

Ebenso wird die oben gestellte Aufgabe von einem Verfahren der eingangs genannten Art gelöst, bei welchem auf die Dienstinitialisierungsnachricht hin erfindungsgemäß seitens der Dienstesteuereinrichtung überprüft wird, ob der zumindest eine vom Teilnehmer subskribierte Dienst die auf seiten der ersten Dienstevermittlungseinrichtung angebotene Leistungsmenge übersteigt, und im Falle, dass dies zutrifft,
a) seitens der Dienstesteuereinrichtung (SCP) aus der Rufadresse des gerufenen Teilnehmers (TNB) eine Routingadresse, welche eine Information zum Weiterrouten der Verbindung zu einer zweiten, eine für den Dienst erforderliche Leistungsmenge unterstützenden Dienstevermittlungseinrichtung (SS2) enthält, erstellt und der ersten Dienstevermittlungseinrichtung (SS1) übermittelt (5) wird,
b) seitens der ersten Dienstevermittlungseinrichtung (SS1) gemäß der empfangenen Routingadresse die Verbindung zu der zweiten Dienstevermittlungseinrichtung (SS2) geroutet (6) wird und
c) der zumindest eine vom Teilnehmer subskribierte Dienst über die zweite Dienstevermittlungseinrichtung (SS2) vermittelt (10-12) wird.

Es ist hierbei günstig, wenn die erste Dienstevermittlungseinrichtung von einer Teilnehmerdatenbasis, welche in dem Mobilfunknetz zur Speicherung von Daten der im Netz registrierten Teilnehmer vorgesehen ist, eine Subskriptionsinformation betreffend des/der dem Teilnehmer zugeordneten Dienste(s) und die zugehörende(n) Leistungsmenge(n) abfragt und diese in der Dienstinitialisierungsnachricht an den Dienstesteuerknoten übermittelt und seitens der Dienstesteuereinrichtung die Überprüfung der von den Dienstevermittlungseinrichtungen unterstützten Leistungsmengen sowie die Auswahl der zweiten Dienstevermittlungseinrichtung anhand der Subskriptionsinformation erfolgt.

Des weiteren ist eine Realisierung des erfindungsgemäßen Verfahrens in einem Mobilfunknetz besonders zweckmäßig, wobei die Dienstevermittlungseinrichtungen jeweils das MAP-Protokoll oder das INAP-Protokoll unterstützen.

Die Vorteile des erfindungsgemäßen Verfahrens und seiner Ausgestaltungen entsprechen den anhand des erfindungsgemäßen Telekommunikationsnetzes dargestellten.

Die Erfindung wird anhand eines in der Zeichnung dargestellten Ausführungsbeispiels näher erläutert. Im einzelnen zeigen
- Fig. 1: ein beispielhaftes Overlaynetz, in dem die Erfindung realisiert ist, sowie
- Fig. 2: einen Signalisierungsablauf des Routens einer Verbindung für einen MTC-Dienst gemäß der Erfindung.

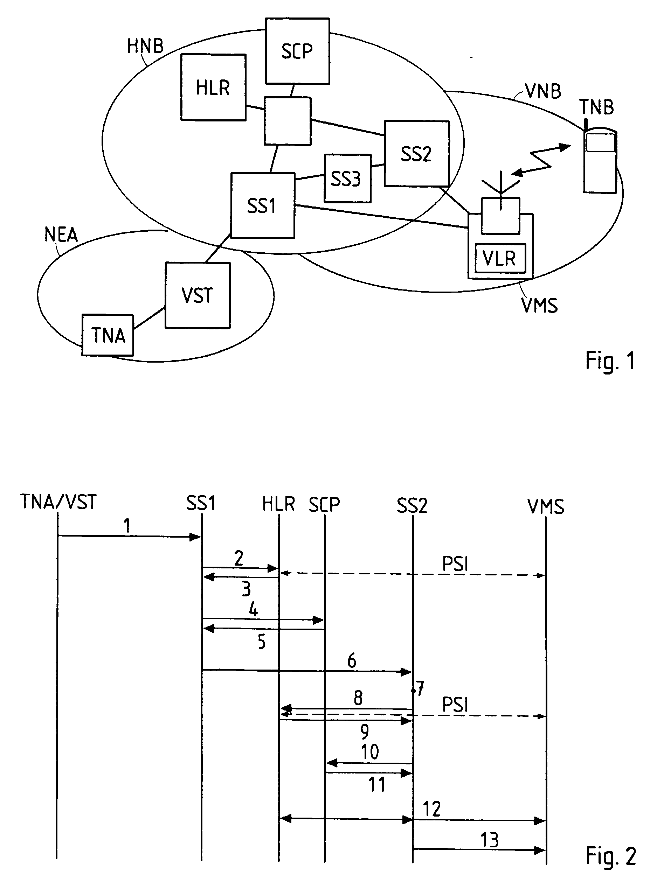

Das Ausführungsbeispiel betrifft die MTC-Bearbeitung eines Intelligenten Dienstes für einen Teilnehmer eines Mobilfunknetzes. In Fig. 1 sind, soweit für das Verständnis der Erfindung von Belang, die Komponenten des Mobilfunknerzes HNB gezeigt, in dem der Teilnehmer TNB angemeldet ist und das diesem somit als Heimatnetz zugeordnet ist. Nach bekannter Art weist das Netz HNB neben Dienstevermittlungsknoten SS1, SS2,SS3 einen als Heimatregister HLR eingerichteten Knoten sowie einen Dienstesteuerknoten SCP auf. Diese Netzknoten sind untereinander verbunden, beispielsweise durch Verknüpfungen wie in der Zeichnung dargestellt; jedoch ist die Topologie der Verknüpfungen im dargestellten Netzverbund für die Erfindung nicht von Belang. Der Teilnehmer TNB selbst ist über eine Basisstation bei einem Mobilvermittlungsknoten VMS ('visited mobile switching center') eingebucht, der somit - zumindest vorübergehend - als der aktuelle Aufenthaltsknoten des Teilnehmers TNB dient. In dem Knoten VMS ist für die Zwecke der Verwaltung der Teilnehmerdaten des Teilnehmers TNB sowie anderer (nicht gezeigter) dort eingebuchter Mobilteilnehmer ein Besucherregister VLR eingerichtet.

Es sei darauf hingewiesen, dass es für die Erfindung belanglos ist, ob die Mobilvermittlungsstelle VMS dem Heimatnetz HNB des Teilnehmers TNB angehört oder einem anderen Mobilfunknetz VNB, in dem sich der Teilnehmer vorübergehend aufhält (sogenanntes 'Roaming'). In Fig. 1 ist der letztere Fall dargestellt, ohne dass dies eine Einschränkung der Erfindung bedeuten würde.

Des weiteren ist in Fig. 1 ein anderer Teilnehmer TNA gezeigt, welcher für die Zwecke der Erfindungsbeschreibung den rufender Teilnehmer darstellen soll. Der rufende Teilnehmer TNA ist über eine Vermittlungsstelle VST in einem Telefonnetz NEA, beispielsweise ein von dem Netzverbund HNB,VNB unabhängiges Festnetz, angeschlossen. Um Verbindungen zwischen den Netzen NEA und HNB zu ermöglichen, ist eine Verknüpfung des Netzes NEA zu der Vermittlung SS1 vorgesehen und dementsprechend die Vermittlung SS1 als sogenannte Zugangsvermittlung eingerichtet. In Mobilfunknetzen sind Zugangsvermittlungen unter der Bezeichnung GMSC ('Gateway Mobile Switching Center') bekannt.

Es sei an dieser Stelle darauf hingewiesen, dass die gezeigte Ausführungsform der Erfindung und insbesondere die dargestellte Netzkonfiguration lediglich als Beispiel zur Erläuterung der Erfindung dient und nicht einschränkend zu verstehen ist. Beispielsweise kann der rufende Teilnehmer TNA auch ein mobiler Teilnehmer desselben Mobilfunknetzes wie der gerufene Teilnehmer TNB sein.

Entsprechend der Voraussetzung der Erfindung ist das Netz des gerufenen Teilnehmers ein Overlaynetz. Insbesondere wird von dem als GMSC für den rufenden Teilnehmer dienende M-SSC-Knoten SS1 lediglich eine Leistungsteilmenge des CAP-Protokolls wie z.B. die CAP-Phase 1, nicht jedoch ein INAP-Protokoll unterstützt. Daher kann der Knoten SS1 die Ausführung eines MTC-Dienstes, welcher den Befehlssatz seiner Leisrungsmenge übersteigt, nicht gewährleisten.

Nach der Erfindung wird bei ankommenden Verbindungen - MTC-Szenario - in Overlaynetzen für den Fall, dass der als Zugangsvermittlungseinrichtung dienende SSP-Knoten keine INAP-fähige Dienstevermittlungseinrichtung ist - d.h. der Dialog mit dem SCP gemäß MAP Version 3 als CAP-Dialog gestartet wird - die Verbindung mit Hilfe einer Routingadresse zu einem anderen, INAP-fähigen M-SSP weitergeroutet.

Dies ist anhand eines beispielhaften Signalisierungsablaufs wie in Fig. 2 gezeigt, bei dem ausgehend von dem Teilnehmer TNA eine Verbindung zu dem Teilnehmer TNB hergestellt und für diesen Teilnehmer TNB ein MTC-Dienst ausgeführt wird. In Fig. 2 verläuft die Zeitachse von oben nach unten; die senkrechten Linien repräsentieren die signalisierenden Stationen (Teilnehmer bzw. Netzknoten) der Fig. 1 entsprechend den verwendeten Bezugszeichen.

Die in dem Netz NEA des rufenden Teilnehmers ablaufenden Details der Verbindungsherstellung sind in Fig. 2 nicht dargestellt, da sie für die Erfindung nicht von Belang und dem Fachmann wohlbekannt. Bei dem Routen der Verbindung in das Netz HNB wird nach bekannter Art an den als Zugangsvermittlung dienenden M-SSC-Knoten SS1 eine Verbindungsanforderung 1 in Form einer IAM-Nachricht ('Initial Address Message') gemäß ISUP gesendet.

Aufgrund der empfangenen Verbindungsanforderung 1 wird von dem Knoten SS1 nach ebenfalls bekannter Art eine ZweischrittInterrogation 2,3 (sogenannte '2step-interrogation') gemäß MAP-Version 3 mit dem Heimatregister HLR, das dem Teilnehmer TNB zugeordnet ist, initiiert. Gemäß dem MAP-Protokoll besteht die Interrogation aus einer Anfrage 2 in Form einer SRI-Nachricht und der zugehörenden Antwort 3 in Form einer SRI-Ack-Nachricht. Sofern erforderlich führt das Heimatregister eine Aufenthaltsanfrage PSI ('Provide Subscriber Information') gemäß MAP-Protokoll durch, um die zum Erstellen der Nachricht 3 erforderlichen Daten zu erhalten.

Die Antwortnachricht 3 enthält neben Informationen zum Aufenthaltsbereich des gerufenen Teilnehmers (insbesondere die Kennung des aktuellen Besucherregisters VLR) eine sogenannten T-CSI ('Terminal Call Subscriber Information') als Information betreffend die dem Teilnehmer TNB zugeordneten MTC-Dienste. Unter Verwendung der in der T-CSI enthaltenen Information zur Durchführung von MTC-Diensten sendet der Knoten SS1 eine IDP-Nachricht 4 an den Dienstesteuerknoten SCP.

Nach der Erfindung wird seitens des Dienstesteuerknotens SCP überprüft, ob der gewünschte Dienst mit der im Knoten SS1 zur Verfügung stehende Leistungsmenge ausführbar ist. In dem hier betrachteten Beispiel wird aufgrund des Umstands, dass die Signalisierung der Nachricht 4 auf dem CAP-Protokoll anstelle eines INAP-Protokolls basiert, erkannt, dass im Knoten SS1 die zur Verfügung stehende Leistungsmenge auf dem CAP-Protokoll beruht und somit für den anhand der T-CSI spezifizierten Dienst nicht ausreicht. Daher erstellt der Dienstesteuerknoten SCP auf der Grundlage der Teilnehmerrufnummer des Teilnehmers TNB eine neue Rufadresse, welche im folgenden als Routingadresse bezeichnet wird. Die Routingadresse gewährleistet erfindungsgemäß ein Weiterrouten der Verbindung zu einem INAP-fähigen Dienstevermittlungsknoten SS2. Der Dienstesteuerknoten SCP sendet eine CONNECT-Nachricht 5 gemäß dem CAP-Protokoll, in welcher die Routingadresse in dem CONNECT-Parameter 'destinationRoutingAddress' eingetragen ist, an den M-SSP-Knoten SS1.

In dem Beispiel wird die Routingadresse seitens des Dienstesteuerknotens SCP dadurch gebildet, dass vor die ursprüngliche Teilnehmerrufnummer ein vom Betreiber des Netzes HNB für diesen Zweck vorgesehenes Präfix, z.B. eine Sequenz aus einer Anzahl von Ziffern, gesetzt wird. Diese Anzahl kann vom Betreiber administriert werden; ebenso sind die einzelnen Ziffern selbst von dem Betreiber als Präfix administrierbar.

Zweckmäßigerweise wird das Präfix derart konfiguriert, dass bei der nachfolgenden Ziffernanalyse seitens des Zugangsknotens SS1 die Interrogation des Heimatregisters unterbleibt.

Dies wird z.B. dadurch erreicht, dass der Code-Punkt in den Routingtabellen des Knotens SS1 für die Ziffernfolge des Präfixes derart eingerichtet ist, dass eine Trunkbelegung erfolgt, welche die Verbindung zu SS2 weiterroutet und eine Interrogation nicht erfolgt. Um möglichst große Anteile des Numerierungsplans zu schützen, können hierbei als Ziffern des Präfixes auch Hexadezimalziffern verwendet werden.

Der M-SSP-Knoten SS1 empfängt die CONNECT-Nachricht 5 und routet aufgrund dieser Nachricht die Verbindung gemäß der Routingadresse dadurch weiter, dass er eine abgehende Verbindungsstrecke (einen sogenannten 'Trunk') belegt und eine IAM-Nachricht 6 an den Dienstevermittlungsknoten SS2 sendet. Für das Erstellen der Nachricht 6 seitens des Knotens SS1 werden die in der ursprünglichen Initialisierungsnachricht 1 verwendeten Parameter in die IAM-Nachricht 6 übertragen, mit Ausnahme des IAM-Parameters 'calledPartyNumber', in welchen die Routingadresse aus der CONNECT-Nachricht 5 kopiert wird.

Der INAP-fähige M-SSP-Knoten SS2, zu dem die Verbindung geroutet wird, ermittelt im nun folgenden Schritt 7 aus der Routingadresse wieder die ursprüngliche Teilnehmerrufnummer, in dem Beispiel wird das hinzugefügte Präfix abgeschnitten.

Die so gewonnene Rufadresse, die mit der 'CalledPartyAddress' der anfänglichen IAM-Nachricht 1 ubereinstimmt, wird in dem Knoten SS2 nach bekannter Art der Ziffernanalyse unterworfen.

Die nun folgende, von dem INAP-fahigen Knoten SS2 ausgehende Verbindungsbehandlung entspricht der Situation, als ob die Verbindungsaufforderung 1 direkt bei diesem Knoten SS2 eingetroffen wäre: Nach einer Zweischritt-Interrogation 8,9 (wiederum gegebenenfalls mit einer PSI-Anfrage) erfolgt ein Dialog 10,11 zwischen dem Dienstesteuerknoten SCP und dem Dienstevermittlungsknoten SS2 . Der Dialog 10,11 erfolgt nach wohlbekannter Art gemäß CAMEL-Standard über das zwischen den beiden Knoten SCP,SS2 eingerichtete INAP-Protokoll; des weiteren wird der von dem gerufenen Teilnehmer subskribierte MTC-Dienst im Rahmen dieses INAP-Dialogs initiiert und ausgeführt. Auch der übrige Fortgang der Verbindungsherstellung, z.B. eine nochmalige Interrogation 12 mit dem Heimatregister sowie schließlich Weiterrouten 13 der Verbindung zu dem aktuellen Aufenthaltsknoten VMS des gerufenen Teilnehmers, erfolgt nach bekannter Art, vgl. hierzu die genannten CAMEL-Standards.

Der von dem M-SSP-Knoten SS1 abgehende Trunk (vgl. Schritt 6 oben) ist entweder direkt mit dem Zielknoten SS2 verbunden oder führt zumindest in dessen Richtung, z.B. bis zu einem Knoten SS3. Für den ersteren Fall kann, in einer von dem oben dargestellten Ablauf abweichend, bereits der Knoten SS1 bei Belegung des Trunks für das Abschneiden des Präfixes sorgen, so dass insbesondere im Fall eines ISUP-Trunks die abgehende IAM-Nachricht 6 bereits die ursprünglich gewählte Rufnummer, welche nach bekannter Art in dem 'CalledPartyNumber'-Parameter der IAM-Nachricht 1 enthalten war, ohne hinzugefügten Ziffern enthält. Im letzteren Fall wird das Präfix im Zielknoten SS2 oder in einem dem Zielknoten im Routingverlauf direkt vorgeordneten Knoten SS3 abgeschnitten.

## Patentansprüche

1. Telekommunikationsnetz (HNB) mit
- einer Dienstesteuereinrichtung (SCP) zum Steuern und Durchführen von Intelligenten Diensten und
- Dienstevermittlungseinrichtungen (SS1,SS2,SS3), welche zur Vermittlung von Leistungskomponenten Intelligenter Dienste jeweils eine vorgegebene Leistungsmenge gemäß einem vorgegebenen Anwendungsprotokoll unterstützen,
**dadurch gekennzeichnet,**
dass die Dienstesteuereinrichtung dazu eingerichtet ist, aufgrund einer von einer ersten Dienstevermittlungseinrichtung (SS1) her empfangenen Dienstinitialisierungsnachricht (4) betreffend eine ankommende Kommunikationsverbindung zu einem Teilnehmer (TNB) des Netzes
• zu überprüfen, ob in Bezug auf den Teilnehmer ein für ankommende Rufe zu aktivierender Intelligenter Dienst subskribiert ist, der die auf seiten der ersten Dienstevermittlungseinrichtung (SS1) angebotene Leistungsmenge übersteigt, sowie im Falle, dass dies zutrifft,
• aus der Rufadresse des gerufenen Teilnehmers (TNB) eine Routingadresse, welche eine Information zum Weiterrouten der Verbindung zu einer zweiten, eine für den Dienst erforderliche Leistungsmenge unterstützenden Dienstevermittlungseinrichtung (SS2) enthält, zu erstellen und der ersten Dienstevermittlungseinrichtung (SS1) zu übermitteln (5).

2. Telekommunikationsnetz nach Anspruch 1,
**dadurch gekennzeichnet,** dass die Dienstesteuereinrichtung dazu eingerichtet ist, die Überprüfung der von den Dienstevermittlungseinrichtungen unterstützten Leistungsmengen sowie die Auswahl der zweiten Dienstevermittlungseinrichtung (SS2) anhand einer von seiten der ersten Dienstevermittlungseinrichtung übermittelten Subskriptionsinformation betreffend des/der dem Teilnehmer (TNB) zugeordneten Dienste(s) und die zugehörende(n) Leistungsmenge(n) auszuführen.

3. Telekommunikationsnetz nach Anspruch 1 oder 2,
**dadurch gekennzeichnet,** dass es als Mobilfunknetz realisiert ist und die Dienstevermittlungseinrichtungen (SS1,SS2,SS3) jeweils das MAP-Protokoll oder das INAP-Protokoll unterstützen.

4. Verfahren zum Routen einer ankommenden Kommunikationsverbindung in einem Telekommunikationsnetz (HNB) mit
- einer Dienstesteuereinrichtung (SCP) zum Steuern und Durchführen von Intelligenten Diensten und
- Dienstevermittlungseinrichtungen (SS1,SS2,SS3), welche zur Vermittlung von Leistungskomponenten Intelligenter Dienste jeweils eine vorgegebene Leistungsmenge gemäß einem vorgegebenen Anwendungsprotokoll unterstützen,
bei welchem von einer ersten Dienstevermittlungseinrichtung (SS1) des Netzes (HNB) in Folge einer bei ihr ankommenden Verbindungsanforderung (1) für eine Kommunikationsverbindung zu einem Teilnehmer (TNB) des Netzes, welcher zumindest einen für ankommende Rufe zu aktivierenden Intelligenten Dienst subskribiert hat, eine Dienstinitialisierungsnachricht (4) an die Dienstesteuereinrichtung (SCP) gesendet wird,
**dadurch gekennzeichnet,**
dass daraufhin seitens der Dienstesteuereinrichtung (SCP) überprüft wird, ob der zumindest eine vom Teilnehmer subskribierte Dienst die auf seiten der ersten Dienstevermittlungseinrichtung (SS1) angebotene Leistungsmenge übersteigt, und im Falle, dass dies zutrifft,
a) seitens der Dienstesteuereinrichrung (SCP) aus der Rufadresse des gerufenen Teilnehmers (TNB) eine Routingadresse, welche eine Information zum Weiterrouten der Verbindung zu einer zweiten, eine für den Dienst erforderliche Leistungsmenge unterstützenden Dienstevermittlungseinrichtung (SS2) enthält, erstellt und der ersten Dienstevermittlungseinrichtung (SS1) übermittelt (5) wird,
b) seitens der ersten Dienstevermittlungseinrichtung (SS1) gemäß der empfangenen Routingadresse die Verbindung zu der zweiten Dienstevermittlungseinrichtung (SS2) geroutet (6) wird und
c) der zumindest eine vom Teilnehmer subskribierte Dienst über die zweite Dienstevermittlungseinrichtung (SS2) vermittelt (10-12) wird.

5. Verfahren nach Anspruch 4,
**dadurch gekennzeichnet,** dass die erste Dienstevermittlungseinrichtung von einer Teilnehmerdatenbasis (HLR), welche in dem Mobilfunknetz zur Speicherung von Daten der im Netz (HNB) registrierten Teilnehmer vorgesehen ist, eine Subskriptionsinformation betreffend des/der dem Teilnehmer (TNB) zugeordneten Dienste(s) und die zugehörende(n) Leistungsmenge(n) abfragt (2,3) und diese in der Dienstinitialisierungsnachricht (4) an den Dienstesteuerknoten (SCP) übermittelt, und dass seitens der Dienstesteuereinrichtung (SCP) die Überprüfung der von den Dienstevermittlungseinrichtungen unterstützten Leistungsmengen sowie die Auswahl der zweiten Dienstevermittlungseinrichtung (SS2) anhand der Subskriptionsinformation erfolgt.

6. Verfahren nach Anspruch 4 oder 5,
**dadurch gekennzeichnet,** dass es in einem Mobilfunknetz ausgeführt wird, wobei die Dienstevermittlungseinrichtungen (SS1,SS2,SS3) jeweils das MAP-Protokoll oder das INAP-Protokoll unterstützen.
